(19) Europäisches Patentamt / European Patent Office / Office européen des brevets

(11) **EP 3 194 917 B1**

(12) **FASCICULE DE BREVET EUROPEEN**

(45) Date de publication et mention de la délivrance du brevet:
**05.12.2018 Bulletin 2018/49**

(21) Numéro de dépôt: **15763002.1**

(22) Date de dépôt: **14.09.2015**

(51) Int Cl.:
**G01L 1/12** *(2006.01)*  **G01D 5/22** *(2006.01)*
**G01B 7/30** *(2006.01)*  **G01L 3/10** *(2006.01)*

(86) Numéro de dépôt international:
**PCT/EP2015/070976**

(87) Numéro de publication internationale:
**WO 2016/041908 (24.03.2016 Gazette 2016/12)**

(54) **CAPTEUR DE ROTATION INDUCTIF A PRECISION AMELIOREE**

INDUKTIVER ROTATIONSSENSOR MIT VERBESSERTER PRECISION

INDUCTIVE ROTATION SENSOR WITH ENHANCED PRECISION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2014 FR 1458647**

(43) Date de publication de la demande:
**26.07.2017 Bulletin 2017/30**

(73) Titulaire: **Safran Electronics & Defense**
**92100 Boulogne-Billancourt (FR)**

(72) Inventeurs:
• **CAGNAC, Bastien**
  **F-92100 Boulogne-Billancourt (FR)**
• **PIATON, Jérôme**
  **F-92100 Boulogne-Billancourt (FR)**
• **BRENUGAT, Kevin**
  **F-92100 Boulogne-Billancourt (FR)**

(74) Mandataire: **Regimbeau**
**20, rue de Chazelles**
**75847 Paris Cedex 17 (FR)**

(56) Documents cités:
GB-A- 2 050 623    GB-A- 2 050 623
US-A1- 2008 258 715    US-A1- 2008 258 715
US-A1- 2012 068 693

**Description**

DOMAINE DE L'INVENTION

Le domaine de l'invention est celui des capteurs de rotation en particulier des capteurs du type inductif, connus sous l'acronyme anglais RVDT pour Rotary Variable Differential Transformer.

L'invention est notamment applicable à la mesure de faibles angles de rotation relative entre deux arbres.

L'invention trouve une application avantageuse dans la mesure de couple de torsion appliqué à un arbre.

ETAT DE LA TECHNIQUE

Il est connu de mesurer un couple en sortie d'un actionneur par une mesure de torsion de l'arbre de sortie.

Plusieurs moyens de mesure ont ainsi été proposés. Par exemple, on connaît le positionnement, sur l'arbre de sortie de l'actionneur, d'une ou plusieurs jauges de contraintes, dont la déformation en torsion peut être mesurée pour en déduire le couple délivré par l'actionneur.

Dans un contexte où l'actionneur est un actionneur de vol dans un aéronef, l'utilisation de jauges de contraintes n'est cependant pas désirée, car ces jauges étant collées sur l'arbre de sortie, elles sont difficilement remplaçables. En particulier, elles ne sont pas remplaçables sans démonter l'actionneur de l'aéronef : ce sont des pièces dites « non-LRU », pour l'acronyme anglais Line-Replaceable Unit, soit « non-remplaçables en ligne ».

Une déformation en torsion entre deux arbres peut aussi être mesurée par la rotation relative entre les arbres.

Des capteurs de rotation, par exemple des capteurs inductifs ou capteurs RVDT, sont connus.

Ces capteurs comprennent un rotor et un stator, respectivement liés à un arbre libre et un arbre de torsion entrainés par un actionneur.

Une bobine primaire alimentée par un courant alternatif génère un champ magnétique dans un circuit formé par le rotor et le stator.

Deux bobines secondaires produisent, en réaction à ce champ magnétique, des tensions respectives dont les valeurs dépendent de la position angulaire du rotor par rapport au stator.

On peut ainsi déduire de la mesure des tensions aux bornes des bobines secondaires une rotation relative entre le rotor et le stator.

Les capteurs RVDT connus sont adaptés pour mesurer des angles de l'ordre de la dizaine de degrés.

Or, en l'occurrence, les angles de torsion à mesurer sur un arbre de sortie d'un actionneur de vol d'un aéronef sont très faibles, par exemple de l'ordre de 1° ou moins.

L'utilisation d'un capteur RVDT connu pour mesurer un angle de torsion d'un tel arbre présenterait donc une sensibilité très faible, à moins de fortement diminuer la raideur de l'arbre de sortie pour augmenter l'amplitude des mouvements de rotation en sortie.

Ceci n'est pas souhaitable dans le contexte de l'invention. Il existe donc un besoin pour un capteur de couple par mesure de faibles déformations.

Les documents de l'art antérieur pertinents à l'invention sont les brevets GB 2 050 623 A, US 2008/258715 A1 et US 2012/068693 A1.

PRESENTATION DE L'INVENTION

L'invention a pour but de proposer un capteur de rotation présentant une sensibilité plus élevée.

Un autre but de l'invention est de proposer un capteur de couple par mesure de déformations de faibles amplitudes d'un arbre.

A cet égard, l'invention a pour objet un capteur de rotation comprenant :

- un stator et un rotor coaxiaux, le rotor étant monté à débattement angulaire par rapport au stator, le stator et le rotor formant un circuit magnétique,
- un bobinage primaire, adapté pour générer un champ magnétique dans le circuit magnétique quand il est alimenté par un courant alternatif, et
- au moins un bobinage secondaire, adapté pour présenter à ses bornes une différence de potentiel en réponse au champ magnétique généré dans le circuit magnétique par le bobinage primaire, ladite différence de potentiel variant en fonction du débattement angulaire du rotor par rapport au stator qui est fonction de l'angle de rotation du rotor par rapport au stator,

caractérisé en ce que le circuit magnétique comporte au moins une dent s'étendant radialement par rapport à l'axe du stator et du rotor, et au moins une encoche adaptée pour recevoir ladite dent de sorte que la dent soit séparée de l'encoche par au moins un entrefer dit tangentiel, variable en fonction du débattement angulaire du rotor par rapport au stator,

et en ce que la dent et l'encoche sont conformées pour que lors d'une rotation du rotor par rapport au stator, une variation de largeur d'un entrefer tangentiel entraine une augmentation ou une diminution de la perméance de l'entrefer et respectivement une augmentation ou une diminution de la tension aux bornes du bobinage secondaire.

Avantageusement, mais facultativement, le capteur de rotation selon l'invention peut en outre comprendre au moins l'une des caractéristiques suivantes :

- le circuit magnétique comporte au moins deux dents alignées axialement et solidaires l'une de l'autre, l'encoche étant adaptée pour recevoir les dents de sorte que chaque dent soit séparée de l'encoche par au moins un entrefer tangentiel, les dents et l'encoche étant conformées de sorte que, lorsqu'une dent est séparée de l'encoche par deux entrefers tangentiels de largeurs identiques, l'autre dent est séparée de l'encoche correspondante par deux entrefers tangentiels de largeurs différentes, et de préférence un entrefer présente une largeur supérieure ou égale au double de la largeur de l'autre entrefer.

- le circuit magnétique comporte au moins trois dents alignées axialement et solidaires l'une de l'autre, comprenant une dent centrale et deux dents latérales, l'encoche étant adaptée pour recevoir les dents de sorte que chaque dent soit séparée de l'encoche qui la reçoit par au moins un entrefer tangentiel, les dents et les encoches étant conformées de sorte que :

  o lorsque la dent centrale est séparée de l'encoche par deux entrefers tangentiels de largeurs identiques, chacune des deux autres dents est séparée de l'encoche par deux entrefers tangentiels de largeurs différentes, et
  o l'entrefer le plus large s'étendant entre une dent latérale et l'encoche est aligné avec l'entrefer le plus étroit s'étendant entre l'autre dent latérale et l'encoche.

- Le capteur comprend deux bobinages secondaires, chaque bobinage étant adapté pour présenter une différence de potentiel variable en fonction de la valeur de largeur de l'entrefer tangentiel le plus étroit entre une dent latérale et l'encoche.
- Les dents latérales présentent une ouverture angulaire inférieure ou égale à la moitié de l'ouverture angulaire de la dent centrale.
- Chaque dent est en outre séparée d'une surface de son encoche respective par un entrefer dit radial, et le plus petit entrefer tangentiel entre une dent latérale et l'encoche présente une largeur inférieure à celle de l'entrefer radial.
- L'un du rotor ou du stator comprend au moins deux disques, chaque dent étant portée par un disque, et un cylindre s'étendant entre les disques, le bobinage primaire et un bobinage secondaire étant enroulés autour du cylindre.
- Le bobinage secondaire est enroulé autour du cylindre et le bobinage primaire est entouré autour du bobinage secondaire.
- Le capteur comprend en outre une unité d'acquisition et de traitement, adaptée pour mesurer une tension aux bornes des bobinages secondaires et pour en déduire un angle de rotation du rotor par rapport au stator.

L'invention a également pour objet un ensemble comprenant :

- un arbre de torsion et un arbre libre, concentriques et montés à débattement angulaire l'un par rapport à l'autre,
- un actionneur, comprenant un arbre de sortie rotatif entrainant les deux arbres, et
- un capteur de rotation selon la description qui précède, le rotor du capteur étant solidaire en rotation de l'arbre libre et le stator étant solidaire en rotation de l'arbre de torsion,

dans lequel l'unité d'acquisition et de traitement du capteur est en outre adaptée pour déterminer, à partir d'un angle de rotation du rotor, un couple subi par l'arbre de torsion.

Le capteur de rotation proposé permet, par sa structure comprenant des entrefers asymétriques entre le rotor et le stator, de détecter une rotation relative même minime entre le rotor et le stator. Ainsi il est possible d'utiliser un tel capteur pour mesurer un couple directement sur l'arbre de sortie d'un actionneur sans impacter sa raideur.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente une vue en perspective d'un capteur de rotation selon un mode de réalisation de l'invention,
- La figure 2a représente une vue en coupe du capteur de la figure 1,
- La figure 2b représente une vue en perspective des disques du rotor du capteur de la figure 1,
- La figure 2c représente une vue de face du capteur de la figure 1,
- La figure 3a représente la perméance magnétique des entrefers d'un capteur selon un mode de réalisation de l'invention en fonction de l'angle de rotation relative du rotor et du stator.
- La figure 3b représente les flux magnétiques dans les bobinages primaires et secondaires du capteur en fonction de l'angle de rotation.
- La figure 3c représente les tensions des bobinages secondaires du capteur en fonction de l'angle de rotation,
- La figure 3d représente la sensibilité du capteur en fonction de l'angle de rotation,
- La figure 3e représente la sensibilité du capteur en fonction d'un effort de torsion.
- La figure 4 représente schématiquement un ensemble comprenant un actionneur et un capteur de couple.

DESCRIPTION DETAILLEE D'AU MOINS UN MODE DE REALISATION DE L'INVENTION

*Structure du capteur de couple*

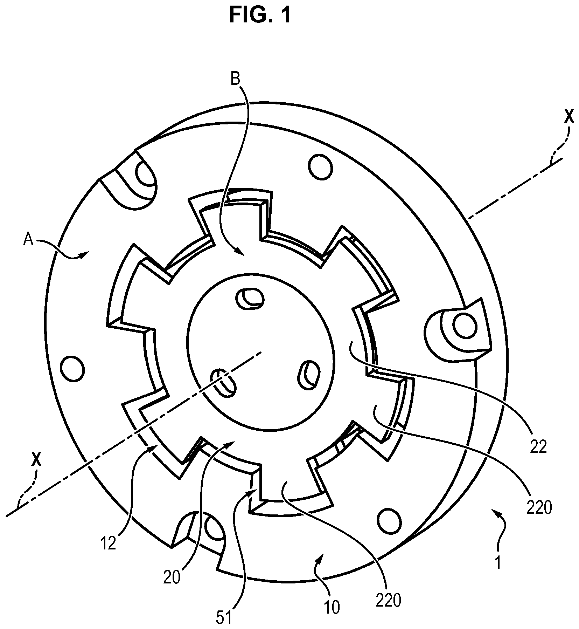

En référence à la figure 1, on a représenté un capteur de rotation 1.

Ce capteur comprend un stator A, et un rotor B, qui sont deux pièces concentriques autour d'un axe X-X. Le rotor B est monté rotatif par rapport au stator A, ou au moins, compte-tenu des faibles angles de rotation à mesurer, monté à débattement angulaire par rapport au stator.

Avantageusement, mais facultativement, le stator A et le rotor B sont des pièces de révolution autour de l'axe X-X.

Le stator A et le rotor B forment ensemble un circuit magnétique. A cet égard, ils sont formés en un matériau magnétique, par exemple en fer.

Le capteur de rotation 1 comprend en outre un bobinage primaire 30, qui est adapté pour générer un champ magnétique dans le circuit magnétique en réponse à l'application sur le bobinage d'un courant alternatif.

Le capteur de rotation 1 comprend enfin au moins bobinage secondaire 40, qui est adapté pour présenter une différence de potentiel en réaction à une excitation magnétique. En particulier, la génération d'un champ magnétique dans le circuit magnétique par le bobinage primaire, suscite l'apparition d'une différence de potentiel aux bornes du bobinage secondaire.

Cette différence de potentiel varie en fonction du débattement angulaire du rotor par rapport au stator, comme expliqué ci-après, et est mesurée par une unité 50 d'acquisition et de traitement du capteur 1, pour en déduire l'angle de rotation du rotor par rapport au stator.

Avantageusement, et comme représenté sur les figures, le rotor s'étend à l'intérieur du stator en étant monté rotatif dans celui-ci. Alternativement, le rotor B pourrait s'étendre autour du stator A.

Ainsi, pour conserver la généralité de l'invention, on note 10 la pièce radialement externe, cette pièce pouvant être le rotor ou le stator, et 20 la pièce radialement interne.

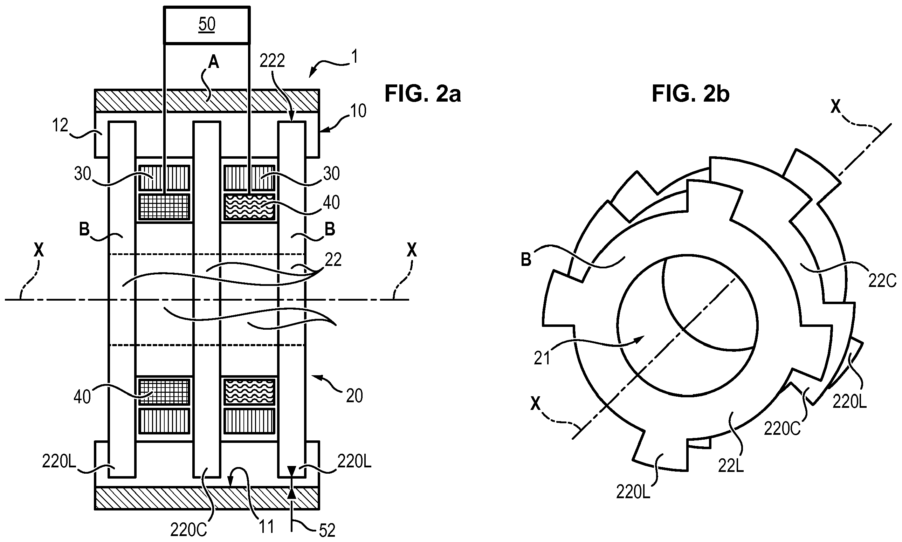

La pièce radialement interne 20 comprend au moins un disque 22 coaxial avec l'axe X-X. Cette pièce 20 comprend de préférence deux disques 22 coaxiaux et solidaires en rotation, et encore plus avantageusement trois disques 22 coaxiaux, et solidaires en rotation. Dans ce cas on note 22L les deux disques latéraux, et 22C le disque central, disposé entre les disques latéraux et à égales distances de ceux-ci. Avantageusement, les disques latéraux 22L se trouvent aux extrémités axiales de la pièce radialement interne 20, comme visible par exemple sur la figure 2a.

Dans le cas où la pièce radialement interne 20 comprend deux disques 22, elle comprend en outre un cylindre 23 s'étendant les disques 22. Dans le mode de réalisation préféré dans lequel la pièce 20 comprend trois disques, elle comprend deux cylindres 23, chaque cylindre s'étendant entre deux disques adjacents. Dans ce cas, chaque cylindre 23 s'étend entre le disque central 22C et un disque latéral 22L.

Les disques 22 sont solidaires en rotation. Avantageusement, pour ce faire les disques 22 sont formés d'une seule pièce avec le ou les cylindres intermédiaires 23, de sorte que l'ensemble des disques 22 et des cylindres 23 forme une seule pièce monobloc.

Les disques 22 et les cylindres 23 du rotor sont formés en un matériau magnétique, par exemple du fer.

Avantageusement, la pièce radialement interne comprend une ouverture traversante 21 de section circulaire et centrée, rendant ainsi cette pièce 20 tubulaire et creuse, de manière à pouvoir la fixer à un arbre. Dans ce cas, si l'arbre est rotatif, des moyens d'accouplement en rotation de la pièce 20 à l'arbre sont avantageusement prévus sur la surface interne de la pièce, c'est-à-dire sur le pourtour de l'ouverture 21.

Autour de chaque cylindre 23 est enroulée une partie du bobinage primaire 30 et un bobinage secondaire 40. Avantageusement, les cylindres 23 présentent un rayon strictement inférieur aux rayons des disques 22, formant ainsi des encoches dans lesquels les bobinages peuvent être positionnés.

De plus, comme visible sur la figure 2a, chaque bobinage secondaire 40 est avantageusement enroulé directement autour du cylindre 23 respectif, tandis que le bobinage primaire 30 est enroulé autour des bobinages secondaires, de manière à obtenir successivement, à rayon croissant par rapport à l'axe X-X :

- Un cylindre 23,
- Un bobinage secondaire 40, et
- Une partie de bobinage primaire 30.

Comme expliqué ci-après, le circuit magnétique créé par le rotor et le stator lors de l'excitation du bobinage primaire se trouvant au niveau des extrémités radialement externes des disques 22, le bobinage primaire 30 se trouve ainsi plus près de ce circuit et les fuites de champ magnétique sont donc réduites.

On comprend ainsi que lorsque la pièce 20 comprend deux disques, elle comporte un seule bobinage secondaire, et lorsqu'elle comprend trois disques, elle comporte deux bobinages secondaires enroulés autour de cylindres respectifs. Ce mode de réalisation permet, comme décrit ci-après, de rendre la mesure de rotation insensible à la tension d'excitation, en effectuant un traitement différentiel entre les tensions des bobinages secondaires.

*Circuit magnétique*

Le circuit magnétique comprend au moins une dent 220, s'étendant radialement par rapport à l'axe X-X, et une encoche 12, adaptée pour recevoir ladite dent. La dent 220 est montée à débattement angulaire par rapport à l'encoche 12. Avantageusement, la dent 220 est solidaire du rotor ou du stator, et l'encoche 12 est solidaire du stator ou du rotor, pour qu'une rotation du rotor relativement au stator entraine une rotation de la dent par rapport à l'encoche.

Dans l'exemple non limitatif qui suit et représenté sur les figures, chaque dent 220 est portée par un disque 22 de la pièce radialement interne 20, et l'encoche 12 est portée par la pièce radialement externe. Alternativement, l'encoche 12 pourrait être constituée d'une pluralité d'encoches formées sur les disques, les encoches étant identiques et alignées, et les dents pourraient être formées sur une surface radialement interne de la pièce externe 10.

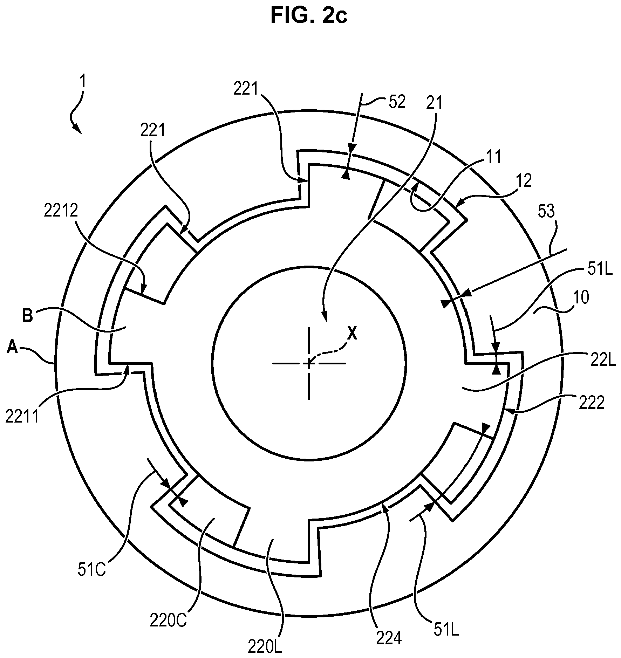

Pour reprendre l'exemple des figures, comme visible sur la figure 2c, la pièce radialement externe 10 comprend, sur une surface radialement interne 11, au moins une encoche 12, s'étendant selon un axe parallèle à l'axe X-X, et présentant une ouverture angulaire constante sur toute sa longueur, c'est-à-dire sur toute son extension axiale. Alternativement, une encoche 12 peut être formée par plusieurs encoches identiques et alignées entre elles.

De préférence, la pièce radialement externe 10 comprend une pluralité d'encoches toutes identiques et réparties à intervalles angulaires constant sur la circonférence de sa surface interne 11, et chaque disque 22 présente une pluralité de dents 220 en saillie, les dents étant reçues dans les encoches 12 du stator de sorte que chaque encoche du stator reçoive une dent 220 de chaque disque 22 du rotor 20.

Ainsi, si la pièce externe 10 comprend une pluralité d'encoches 12 réparties angulairement sur la surface interne 11 du stator, alors chaque disque 22 comprend autant de dents 220, les dents d'un même disque étant identiques, et réparties régulièrement sur la circonférence du disque de sorte que toutes les dents 220 soient reçues dans des encoches 12 correspondantes.

Comme visible sur la figure 2c, chaque dent 220 est donc séparée d'une paroi de l'encoche 12 qui la reçoit par un interstice qui comprend :

- deux entrefers tangentiels 51 s'étendant entre les parois latérales 221 d'une dent et celles 121 de l'encoche dans laquelle se trouve la dent, les parois latérales étant les parois s'étendant selon un plan parallèle à l'axe X-X, et avantageusement radial, l'entrefer est donc mesuré orthogonalement à ce plan, c'est-à-dire qu'il est tangentiel autour de l'axe X-X,
- Un premier entrefer radial 52 en tête de dent 220, s'étendant entre une paroi radialement externe 222 d'une dent et la surface interne de la pièce 10 au niveau de l'encoche 12, et
- Un second entrefer radial 53, s'étendant entre la surface interne 11 de la pièce 10 entre deux encoches 12 consécutives et la surface externe 224 du disque en regard de celle-ci.

Les dents 220 et les sections des encoches sont de préférence conformées de sorte que les largeurs des entrefers tangentiels 51, mesurées orthogonalement aux parois latérales des dents 220 et des encoches, soient constantes sur toute la surface de l'entrefer.

Le capteur 1 comprend au moins un couple dent-encoche conformé de telle sorte qu'une rotation du rotor par rapport au stator cause une variation de largeur d'un entrefer tangentiel 51 entre la dent 220 et l'encoche 22, induisant une variation de la différence de potentiel aux bornes du bobinage secondaire 40.

Avantageusement, en référence aux figures 2b et 2c, le circuit magnétique comporte au moins une dent 220 conformée de sorte que les entrefers tangentiels 51 s'étendant de part et d'autre de la dent présentent des largeurs différentes. De plus, l'un des entrefers tangentiels 53 présente avantageusement une largeur supérieure ou égale au moins au double de l'autre entrefer tangentiel, pour minimiser le champ magnétique passant par l'entrefer le plus large.

De cette façon, lors d'une rotation du rotor par rapport au stator, la dent 220 se rapproche ou s'éloigne de l'encoche 12 au niveau de son entrefer tangentiel le plus étroit, causant respectivement une augmentation ou une diminution de la perméance de l'entrefer, et par conséquent, une augmentation ou une diminution de la tension aux bornes du bobinage secondaire. En revanche, du côté de l'entrefer le plus large, le champ magnétique passant par cet entrefer reste négligeable quel que soit le débattement angulaire de la dent dans l'encoche.

Dans le mode de réalisation où la pièce interne 20 comporte deux disques 22, les dents 220 d'un disque 22 sont conformées de sorte que les entrefers tangentiels 51 entre chaque dent 220 du disque et l'encoche soient asymétriques par rapport à la dent, quand les entrefers tangentiels entre les dents de l'autre disque et l'encoche sont symétriques.

Le premier disque, formant les entrefers asymétriques, induit par sa rotation relative dans la pièce externe une variation du champ magnétique, et le second disque ferme le circuit magnétique sans impacter le champ.

Dans le mode de réalisation préféré où la pièce interne 20 comporte trois disques, les dents 220L des disques latéraux 22L sont conformées de sorte que les entrefers tangentiels entre chaque dent 220L et l'encoche 12 soient asymétriques, en particulier présentent des largeurs différentes, quand les entrefers tangentiels entre les dents 220C du disque central 22 C et l'encoche sont symétriques.

De plus, pour chaque encoche 12, l'entrefer latéral le plus large pour la dent 220L d'un premier disque latéral 22L correspond à l'entrefer latéral le plus étroit pour la dent 220L de l'autre disque latéral 22L. Ainsi l'entrefer le plus étroit du côté d'un premier disque latéral est en regard de l'entrefer le plus large du côté de l'autre disque latéral.

On a indiqué ci-avant que dans ce cas le capteur comprend deux bobinages secondaires 40, chaque bobinage étant enroulé autour d'un cylindre respectif.

On comprend dans ce cas que les bobinages secondaires 40 ne sont pas soumis au même champ magnétique et ne présentent donc pas la même différence de potentiel à leurs bornes selon le sens de rotation du rotor par rapport au stator.

En effet, pour un disque latéral 22L, l'entrefer tangentiel le plus étroit se trouve toujours d'un même coté par rapport à une dent. Si le rotor tourne par rapport au stator de façon à diminuer la largeur de l'entrefer, la perméance de cet entrefer augmente, et la tension aux bornes du bobinage secondaire correspond augmente aussi. Cependant, la perméance de l'entrefer tangentiel le plus étroit de l'autre disque latéral 22L diminue avec la rotation du rotor, et donc diminue la tension aux bornes du bobinage secondaire correspondant.

Ainsi, cette configuration permet de faire varier la tension aux bornes de chaque bobinage secondaire en fonction du sens de rotation du rotor, et donc de déterminer ce sens de rotation à partir de la tension mesurée sur les bobinages secondaires.

Dans ce cas, toutes les dents 220L d'un disque latéral 22L sont conformées identiquement de sorte que l'entrefer le plus large se trouve toujours d'un même côté de la dent, pour maximiser la variation de la perméance de l'entrefer total entre le disque et la pièce externe 10 en cas de rotation relative des deux pièces.

Selon un mode de réalisation préféré, les dents 220L des disques latéraux 22L présentent une ouverture angulaire réduite par rapport aux dents 220C du disque central. Dans le cas où le capteur ne comprend que deux disques, les dents du disque correspondant aux entrefers asymétriques présentent une ouverture angulaire réduite par rapport aux dents de l'autre disque.

Avantageusement l'ouverture angulaire des dents 220L des deux disques latéraux est identique et inférieure ou égale à 50%, et de préférence inférieure à 30%, de celle des dents 220C du disque central 22C.

De plus, dans chaque encoche, comme visible sur la figure 2b, les dents sont avantageusement disposées relativement les unes aux autres comme suit :

- Une première paroi latérale 2211 d'une dent 220C du disque central est alignée avec une paroi latérale correspondante d'une dent 220L d'un premier disque latéral, et
- La paroi latérale opposée 2212 de la dent 220C est alignée avec la paroi latérale correspondante de la dent 220L du second disque latéral.

On va maintenant décrire le fonctionnement de ce capteur.

La description qui suit porte sur le mode de réalisation préféré dans lequel :

- La pièce radialement interne 20 comporte trois disques, pour différencier les sens de rotation du rotor,

- La pièce radialement interne 20 est le rotor, et la pièce externe 10 est le stator, et
- La pièce radialement interne 20 porte les dents, et la pièce externe 10 les encoches.

Le même fonctionnement serait obtenu dans les variantes de réalisation du capteur dans lequel le rotor et le stator sont interchangés, et/ou les dispositions des dents et des encoches.

Le bobinage primaire 30, alimenté par un courant électrique, génère dans chaque cylindre un champ magnétique.

Le champ magnétique passe par chaque disque latéral puis vers le stator au travers d'un entrefer.

Selon la configuration décrite précédemment, l'entrefer latéral le plus large d'une dent - par exemple du côté opposé à celui où les parois des dents d'un disque latéral et du disque central sont alignées - est suffisamment large pour que le flux magnétique passant pas cet entrefer soit négligeable.

Alors, le champ magnétique généré par le bobinage primaire privilégie, pour chaque dent d'un disque latéral, l'entrefer latéral le plus étroit.

Il parcourt ensuite le stator, puis un entrefer latéral d'une dent du disque central, ce qui génère une tension dans le bobinage secondaire se trouvant entre le disque central et le disque latéral concerné.

Or, l'entrefer le plus étroit, appelé également entrefer de mesure, est avantageusement d'une largeur inférieure à 0,5 mm, et avantageusement de 0,3 mm lorsque la rotation relative du rotor et du stator est nulle, c'est-à-dire que les entrefers de part et d'autre d'une dent du disque central sont égaux.

Du fait de cette dimension, la perméance de l'entrefer varie significativement en cas de rotation du rotor dans le stator, ce qui induit une variation de tension dans les bobinages secondaires qui permet d'en déduire l'ampleur de la rotation relative du rotor et du stator.

Enfin, dans chaque encoche du stator, comme les entrefers les plus étroits se trouvent sur les côtés opposés pour les dents des deux disques latéraux, les perméances de chaque entrefer (donc les tensions des secondaires correspondants) présentent des pentes de signe opposé pour une rotation relative donnée, Ceci permet de déduire des tensions aux bornes des secondaires le sens et la valeur absolue de la rotation relative entre le rotor et le stator.

Ainsi par exemple, sur la configuration représentée en figure 2c : si le rotor tourne vers le côté gauche sur le plan de la figure, la largeur de chaque entrefer de mesure au niveau du premier disque latéral est réduite. La perméance de chaque entrefer est augmentée, et la tension du bobinage secondaire correspondant à ce disque augmente.

De l'autre côté du disque central se trouve l'autre disque latéral (non visible). Pour ce disque, la largeur de l'entrefer de mesure augmente lorsque le rotor tourne vers la gauche, et donc sa perméance diminue.

Il en résulte que la tension du bobinage secondaire correspondant à ce disque diminue.

Ainsi en relevant les tensions des deux bobinages secondaires, on en déduit la direction de la rotation et l'ampleur de la rotation du rotor dans le stator.

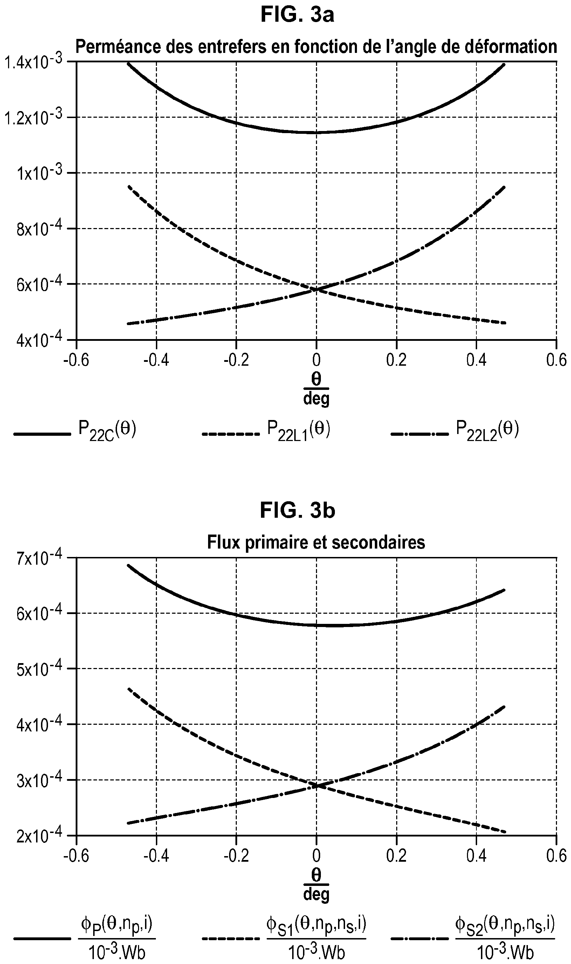

On a représenté sur les figures 3a à 3e, des données expérimentales d'un capteur du type décrit précédemment.

Les dimensions de ce capteur sont un diamètre intérieur (au niveau de l'ouverture traversante 21) de 15 mm, et un diamètre extérieur, au niveau de la surface radialement externe du stator, de 40 mm.

L'entrefer de mesure de chaque dent présente une largeur de 0,3 mm quand les entrefers de part et d'autre des dents du disque central sont égaux. Les entrefers tangentiels 52 et 53 présentent des largeurs de 0,6 mm.

Enfin, le stator présente quatre encore et chaque disque présente quatre dents, les dents des disques latéraux 22L présentant une ouverture angulaire de 20% de celles du disque central 22C.

Sur la figure 3a, on a représenté la perméance des entrefers de mesure en fonction de l'angle de déformation. On a noté $P_{22L1}$ et $P_{22L2}$ les perméances des entrefers de mesure (les plus étroits) des deux disques latéraux et P22C la perméance du disque central (perméances cumulées des entrefers latéraux).

La peméance est fournie par la formule :

$$P = \frac{\mu.S}{l},$$ où $\mu$ est la perméabilité magnétique du milieu, S la section de l'entrefer, et l sa largeur.

On constate sur la figure 3a que la perméance des entrefers d'un disque latéral augmente avec l'angle rotation quand la perméance de l'autre disque diminue.

Sur la figure 3b, on a représenté les valeurs des flux magnétiques au bobinage primaire 30 et aux bobinages secondaires 40, en notant $\Phi_P$ et $\Phi_S$ les flux magnétiques au primaire et au secondaire, $n_p$ et $n_s$ le nombre de spires des bobinages correspondant, et i le courant dans le bobinage primaire.

Les flux magnétiques au secondaire varient en fonction de la perméance des entrefers.

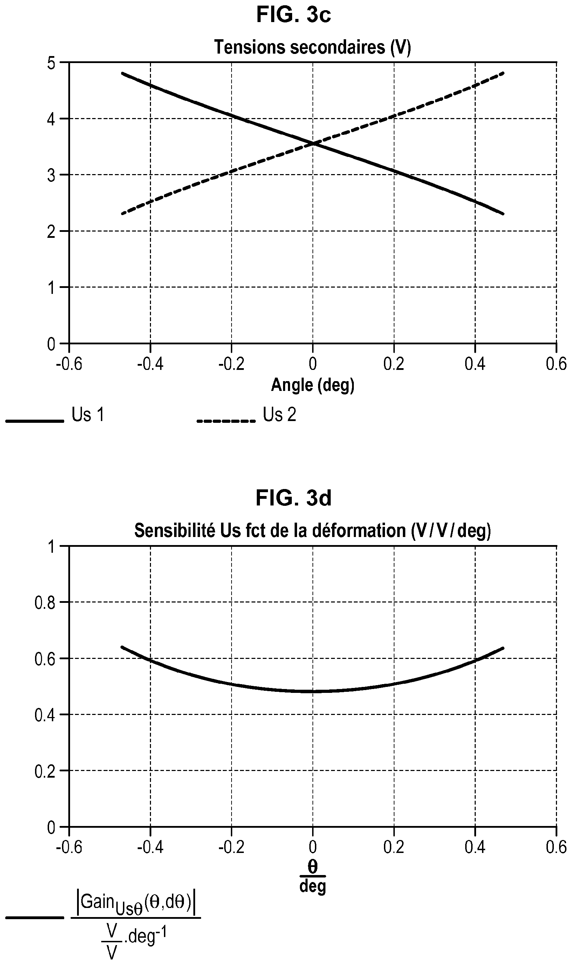

Sur la figure 3c, on a représenté les valeurs des tensions aux secondaires induites par les flux magnétiques. On constate sur la figure que la valeur de la tension à chaque bobinage fournit une information à la fois sur la valeur de l'angle de rotation entre le rotor et le stator, mais aussi sur la direction de la rotation.

En exprimant la sensibilité du capteur en V/V/deg, cette sensibilité est représentée en figure 3d. On constate une sensibilité du capteur pour des angles à partir de 0,1 ou 0,2°, ce qui démontre une précision accrue par rapport à des capteurs de type RVDT précédemment proposés, pour lesquels la sensibilité était de l'ordre de quelques degrés.

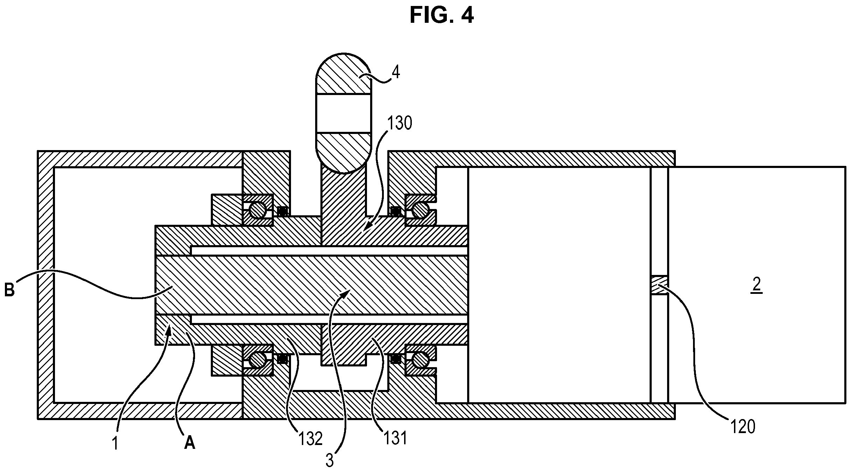

On a représenté sur la figure 4 l'utilisation du capteur 1 pour la mesure du couple délivré par un actionneur.

La figure 4 représenté un ensemble comprenant un actionneur 2, comprenant un arbre de sortie rotatif 120 entrainant un arbre de torsion 130, ou corps d'épreuve, sur lequel est monté une charge 4 à entrainer. On a représenté par 131 la partie de l'arbre de torsion entrainant la charge 4, et par 132 la partie d'extrémité de l'arbre au-delà de la charge, cette partie n'étant pas soumise au couple transmis à la charge.

L'ensemble comprend en outre un arbre 131 coaxial à l'arbre de torsion. Cet arbre 3 n'étant pas soumis à un couple, il ne se déforme pas.

Les deux arbres sont entrainés en rotation par l'arbre de sortie de l'actionneur.

Le capteur est positionné de sorte que le stator A soit solidaire en rotation de l'un des arbres, avantageusement l'arbre de torsion, et le rotor B soit solidaire en rotation de l'autre arbre, avantageusement l'arbre libre. Le capteur est disposé à l'extrémité opposée des arbres par rapport à l'actionneur pour ne pas gêner la transmission de couple entre l'actionneur et l'arbre de torsion 3 pour entrainer la charge.

L'unité de traitement 50 du capteur mesure donc une rotation relative entre l'arbre libre et l'arbre de torsion. Dans ce cas où le capteur de rotation est utilisé en tant que capteur de couple, l'unité de traitement 50 est en outre adaptée pour déduire, d'une valeur d'angle relatif entre l'arbre de torsion et l'arbre livre, un couple appliqué par l'actionneur sur l'arbre de torsion, en fonction de la raideur de l'arbre de torsion, ce couple étant le résultat du produit de la raideur par la valeur absolue de l'angle mesuré.

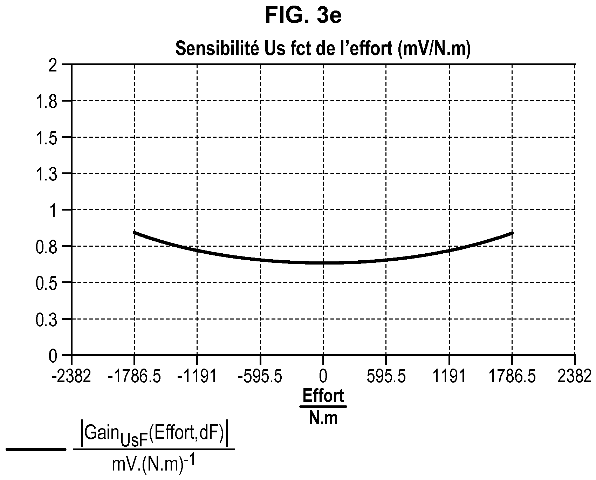

Pour une raideur en torsion de 3800 N.m/deg de l'arbre de torsion, on obtient une sensibilité du capteur 1 de couple, en fonction de l'effort représentée en figure 3e. Cette sensibilité correspond à la pente des tensions aux bornes des bobinages secondaires en fonction du couple appliqué par l'actionneur sur l'arbre de torsion.

Ainsi le capteur proposé présente une sensibilité élevée pour de faibles rotations et permet donc de mesurer le couple délivré par un actionneur sans impacter la raideur de son arbre de sortie.

**Revendications**

1. Capteur de rotation (1), comprenant :

   - un stator (A) et un rotor (B) coaxiaux, le rotor (B) étant monté à débattement angulaire par rapport au stator (A), le stator (A) et le rotor (B) formant un circuit magnétique (10, 20),
   - un bobinage primaire (30), adapté pour générer un champ magnétique dans le circuit magnétique quand il est alimenté par un courant alternatif, et
   - au moins un bobinage secondaire (40), adapté pour présenter à ses bornes une différence de potentiel en réponse au champ magnétique généré dans le circuit magnétique par le bobinage primaire, ladite différence de potentiel variant en fonction du débattement angulaire du rotor par rapport au stator qui fonction de l'angle de rotation du rotor par rapport au stator,

**caractérisé en ce que** le circuit magnétique comporte au moins un dent (220) s'étendant radialement par rapport à l'axe (X-X) du stator et du rotor, et au moins une encoche (12) adaptée pour recevoir ladite dent de sorte que la dent soit séparée de l'encoche par au moins un entrefer (51) dit tangentiel, variable en fonction du débattement angulaire du rotor par rapport au stator,
et **en ce que** la dent (220) et l'encoche (12) sont conformées pour que lors d'une rotation du rotor par rapport au stator, une variation de largeur d'un entrefer tangentiel entraine une augmentation ou une diminution de la perméance de l'entrefer et respectivement une augmentation ou une diminution de la tension aux bornes du bobinage secondaire.

2. Capteur de rotation (1) selon la revendication 1, dans lequel le circuit magnétique comporte au moins deux dents alignées (220) axialement et solidaires l'une de l'autre, l'encoche (12) étant adaptée pour recevoir les dents de sorte que chaque dent soit séparée de l'encoche par au moins un entrefer tangentiel (51), les dents (220) et l'encoche (12) étant conformées de sorte que, lorsqu'une dent (220) est séparée de l'encoche par deux entrefers tangentiels de largeurs identiques, l'autre dent est séparée de l'encoche correspondante par deux entrefers tangentiels de largeurs différentes, et de préférence un entrefer présente une largeur supérieure ou égale au double de la largeur de l'autre entrefer.

3. Capteur de rotation (1) selon l'une des revendications 1 ou 2, dans lequel le circuit magnétique (10, 20) comporte au moins trois dents alignées (220L, 220C) axialement et solidaires l'une de l'autre, comprenant une dent centrale (220C) et deux dents latérales (220L),
l'encoche (12) étant adaptée pour recevoir les dents de sorte que chaque dent soit séparée de l'encoche qui la reçoit par au moins un entrefer tangentiel,
les dents et les encoches étant conformées de sorte que :

- lorsque la dent centrale (220C) est séparée de l'encoche (12) par deux entrefers tangentiels (51C) de largeurs identiques, chacune des deux autres dents (220L) est séparée de l'encoche par deux entrefers tangentiels (51L) de largeurs différentes, et
- l'entrefer le plus large s'étendant entre une dent latérale (220L) et l'encoche (12) est aligné avec l'entrefer le plus étroit s'étendant entre l'autre dent latérale (220L) et l'encoche.

4. Capteur (1) de rotation selon la revendication 3, comprenant deux bobinages secondaires (40), chaque bobinage étant adapté pour présenter une différence de potentiel variable en fonction de la valeur de largeur de l'entrefer tangentiel (51L) le plus étroit entre une dent latérale (220L) et l'encoche.

5. Capteur (1) de rotation selon l'une des revendications 3 ou 4, dans lequel les dents latérales (220L) présentent une ouverture angulaire inférieure ou égale à la moitié de l'ouverture angulaire de la dent centrale (220C).

6. Capteur (1) de rotation selon l'une des revendications précédentes, dans lequel chaque dent (220) est en outre séparée d'une surface de son encoche respective par un entrefer dit radial (52),
dans lequel le plus petit entrefer tangentiel (51L) entre une dent latérale (220L) et l'encoche présente une largeur inférieure à celle de l'entrefer radial (52).

7. Capteur (1) de rotation selon l'une des revendications 2 à 6, dans lequel l'un du rotor (B) ou du stator (A) comprend au moins deux disques (22), chaque dent (220) étant portée par un disque, et un cylindre (23) s'étendant entre les disques, le bobinage primaire (30) et un bobinage secondaire (40) étant enroulés autour du cylindre (23).

8. Capteur (1) de rotation selon la revendication 7, dans lequel le bobinage secondaire (40) est enroulé autour du cylindre (23) et le bobinage primaire (30) est entouré autour du bobinage secondaire (40).

9. Capteur (1) de rotation selon l'une des revendications précédentes, comprenant en outre une unité d'acquisition et de traitement (50), adaptée pour mesurer une tension aux bornes des bobinages secondaires et pour en déduire un angle de rotation du rotor par rapport au stator.

10. Ensemble comprenant :

- un arbre de torsion (130) et un arbre libre (3), concentriques et montés à débattement angulaire l'un par rapport à l'autre,
- un actionneur (2), comprenant un arbre de sortie (120) rotatif entrainant les deux arbres (130, 3), et
- un capteur de rotation (1) selon la revendication 9, le rotor (20) du capteur étant solidaire en rotation de l'arbre libre et le stator (10) étant solidaire en rotation de l'arbre de torsion,

dans lequel l'unité (50) d'acquisition et de traitement du capteur est en outre adaptée pour déterminer, à partir d'un angle de rotation du rotor, un couple subi par l'arbre de torsion.

**Patentansprüche**

1. Rotationssensor (1) umfassend:

   - einen koaxialen Stator (A) und Rotor (B), wobei der Rotor (B) mit einer Winkelauslenkung im Verhältnis zum Stator (A) montiert ist, wobei der Stator (A) und der Rotor (B) einen Magnetkreis (10, 20) bilden,
   - eine Primärwicklung (30), die geeignet ist, im Magnetkreis ein Magnetfeld zu erzeugen, wenn er mit Wechselstrom versorgt wird, und
   - zumindest eine Sekundärwicklung (40), die geeignet ist, an ihren Anschlüssen eine Potentialdifferenz als Reaktion auf das im Magnetkreis durch die Primärwicklung erzeugte Magnetfeld aufzuweisen, wobei die Potentialdifferenz entsprechend der Winkelverschiebung des Rotors im Verhältnis zum Stator variiert, die vom Drehwinkel des Rotors im Verhältnis zum Stator abhängt,

   **dadurch gekennzeichnet, dass** der Magnetkreis zumindest einen Zahn (220) umfasst, der sich im Verhältnis radial zur Achse (X-X) des Stators und des Rotors erstreckt, und zumindest eine Kerbe (12), die geeignet ist, den Zahn aufzunehmen, so dass der Zahn von der Kerbe durch zumindest einen sogenannten tangentialen Spalt (51) getrennt ist, der entsprechend der Winkelverschiebung des Rotors im Verhältnis zum Stator variabel ist, und dass der Zahn (220) und die Kerbe (12) so geformt sind, dass, wenn der Rotor im Verhältnis zum Stator eine Drehung ausführt, eine Breitenänderung eines tangentialen Spalts eine Erhöhung oder Verringerung der Durchlässigkeit des Spalts und eine Erhöhung beziehungsweise eine Verringerung der Spannung an den Anschlüssen der Sekundärwicklung bewirkt.

2. Rotationssensor (1) nach Anspruch 1, wobei der Magnetkreis zumindest zwei axial ausgerichtete ineinandergreifende und fest miteinander verbundene Zähne (220) aufweist, wobei die Kerbe (12) geeignet ist, die Zähne so aufzunehmen, dass jeder Zahn durch zumindest einen tangentialen Spalt (51) von der Kerbe getrennt ist, wobei die Zähne (220) und die Kerbe (12) so geformt sind, dass, wenn ein Zahn (220) durch zwei tangentiale Luftspalte gleicher Breite von der Kerbe getrennt ist, der andere Zahn durch zwei tangentiale Luftspalte unterschiedlicher Breite von der entsprechenden Kerbe getrennt ist, und vorzugsweise ein Luftspalt eine Breite größer oder gleich der doppelten Breite des anderen Luftspalts aufweist.

3. Rotationssensor (1) nach einem beliebigen der vorstehenden Ansprüche 1 oder 2, wobei der Magnetkreis (10, 20) zumindest drei axial ausgerichtete und miteinander verbundene Zähne (220L, 220C) aufweist, die einen Mittelzahn (220C) und zwei Seitenzähne (220L) umfassen, wobei die Kerbe (12) geeignet ist, die Zähne aufzunehmen, so dass jeder Zahn von der ihn aufnehmenden Kerbe durch zumindest einen tangentialen Spalt getrennt ist, wobei die Zähne und Kerben so geformt sind, dass:

   - wenn der mittlere Zahn (220C) durch zwei Tangentialspalte (51C) gleicher Breite von der Kerbe (12) getrennt ist, jeder der beiden anderen Zähne (220L) durch zwei Tangentialspalte (51L) unterschiedlicher Breite von der Kerbe getrennt ist, und
   - der breiteste Spalt, der sich zwischen einem Seitenzahn (220L) und der Kerbe (12) erstreckt, auf den schmalsten Spalt ausgerichtet ist, der sich zwischen dem anderen Seitenzahn (220L) und der Kerbe erstreckt.

4. Rotationssensor (1) nach Anspruch 3, umfassend zwei Sekundärwicklungen (40), wobei jede Wicklung geeignet ist, eine variable Potentialdifferenz in Abhängigkeit vom Breitenwert des schmalsten tangentialen Spalts (51L) zwischen einem Seitenzahn (220L) und der Kerbe aufzuweisen.

5. Rotationssensor (1) nach einem beliebigen der vorstehenden Ansprüche 3 oder 4, wobei die Seitenzähne (220L) eine Winkelöffnung aufweisen, die kleiner oder gleich der Hälfte der Winkelöffnung des mittigen Zahns (220C) ist.

6. Rotationssensor (1) nach einem beliebigen der vorstehenden Ansprüche, wobei jeder Zahn (220) ferner von einer Oberfläche seiner jeweiligen Kerbe durch einen sogenannten radialen Spalt (52) getrennt ist, wobei der kleinste tangentiale Spalt (51L) zwischen einem Seitenzahn (220L) und der Kerbe eine geringere Breite als der radiale Spalt (52) aufweist.

7. Rotationssensor (1) nach einem beliebigen der vorstehenden Ansprüche 2 bis 6, wobei einer vom Rotor (B) oder vom Stator (A) zumindest zwei Scheiben (22) umfasst, wobei jeder Zahn (220) von einer Scheibe getragen wird und ein Zylinder (23) sich zwischen den Scheiben erstreckt, wobei die Primärwicklung (30) und eine Sekundärwicklung (40) um den Zylinder (23) gewickelt sind.

**8.** Rotationssensor (1) nach Anspruch 7, wobei die Sekundärwicklung (40) um den Zylinder (23) gewickelt ist und die Primärwicklung (30) um die Sekundärwicklung (40) herum umgeben ist.

**9.** Rotationssensor (1) nach einem beliebigen der vorstehenden Ansprüche, ferner umfassend eine Erfassungs- und Verarbeitungseinheit (50), die geeignet ist, an den Sekundärwicklungen eine Spannung zu messen und davon einen Drehwinkel des Rotors im Verhältnis zum Stator abzuleiten.

**10.** Einheit umfassend :

- eine Verdrehwelle (130) und eine freie Welle (3), konzentrisch und mit einer Winkelverschiebung relativ zueinander gelagert,
- ein Betätigungselement (2) umfassend eine drehende Abtriebswelle (120), die die beiden Wellen (130, 3) antreibt, und
- einen Rotationssensor (1) nach Anspruch 9, wobei der Rotor (20) des Sensors in Drehung mit der freien Welle fest verbunden ist, und der Stator (10) in Drehung mit der Verdrehwelle fest verbunden ist,

wobei die Erfassungs- und Verarbeitungseinheit (50) des Sensors ferner geeignet ist, ausgehend von einem Drehwinkel des Rotors ein Drehmoment zu bestimmen, das von der Verdrehwelle aufgenommen wird.

**Claims**

**1.** A rotation sensor (1), comprising:

- a coaxial stator (A) and rotor (B), the rotor (B) being mounted with angular displacement with respect to the stator (A), the stator (A) and the rotor (B) forming a magnetic circuit (10, 20),
- a primary winding (30), adapted to generate a magnetic field in the magnetic circuit when it is supplied with alternating current, and
- at least one secondary winding (40), adapted to have a potential difference at its terminals in response to a magnetic field generated in the magnetic circuit by the primary winding, said potential difference varying depending on the angular displacement of the rotor with respect to the stator which depends on the rotation angle of the rotor with respect to the stator,

**characterized in that** the magnetic circuit includes at least one tooth (220) extending radially with respect to the axis (X-X) of the stator and of the rotor, and at least one notch (12) adapted to receive said tooth so that the tooth is separated from the notch by at least one so-called tangential air gap (51), variable depending on the angular displacement of the rotor with respect to the stator, and **in that** the tooth (220) and the notch (12) are formed so that during a rotation of the rotor with respect to the stator, a width variation of a tangential air gap causes an increase or a decrease of the permeance of the air gap and respectively an increase or a decrease of the voltage at the terminals of the secondary winding.

**2.** The rotation sensor (1) according to claim 1, wherein the magnetic circuit includes at least two axially aligned teeth (220) integral with one another, the notch (12) being adapted to receive the teeth so that each tooth is separated from the notch by at least one tangential air gap (51), the teeth (220) and the notch (12) being formed so that, when one tooth (220) is separated from the notch by two tangential air gaps of identical widths, the other tooth is separated from the corresponding notch by two tangential air gaps of different widths, and preferably one air gap has a width greater than or equal to twice the width of the other air gap.

**3.** The rotation sensor (1) according to one of claims 1 or 2, wherein the magnetic circuit (10, 20) includes at least three axially aligned teeth (220L, 220C) and integral with one another, comprising a central tooth (220C) and two lateral teeth (220L), the notch (12) being adapted to receive the teeth so that each tooth is separated from the notch that receives it by at least one tangential air gap, the teeth and the notches being formed so that:

- when the central tooth (220C) is separated from the notch (12) by two tangential air gaps (51 C) of identical widths, each of the two other teeth (220L) is separated from the notch by two tangential air gaps (51 L) of different widths, and
- the widest air gap extending between a lateral tooth (220L) and the notch (12) is aligned with the narrowest air gap extending between the other lateral tooth (220L) and the notch.

**4.** The rotation sensor (1) according to claim 3, comprising two secondary windings (40), each winding being adapted to have a variable potential difference depending on the value of the width of the narrowest tangential air gap (51L) between a lateral tooth (220L) and the notch.

**5.** The rotation sensor (1) according to one of claims 3 or 4, wherein the lateral teeth (220L) have an angular opening less than or equal to half the angular opening of the central tooth (220C).

**6.** The rotation sensor (1) according to one of the preceding claims, wherein each tooth (220) is further separated from a surface of its respective notch by a so-called radial air gap (52), wherein the smallest tangential air gap (51L) between a lateral tooth (220L) and the notch has a width less than that of the radial air gap (52).

7. The rotation sensor (1) according to one of claims 2 to 6, wherein one of the rotor (B) or of the stator (A) comprises at least two disks (22), each tooth (220) being carried by a disk, and a cylinder (23) extending between the disks, the primary winding (30) and a secondary winding (40) being wound around the cylinder (23).

8. The rotation sensor (1) according to claim 7, wherein the secondary winding (40) is wound around the cylinder (23) and the primary winding (30) is wound around the secondary winding (40).

9. The rotation sensor (1) according to one of the preceding claims, further comprising an acquisition and processing unit (50), adapted to measure a voltage at the terminals of the secondary windings and to deduce therefrom a rotation angle of the rotor with respect to the stator.

10. An assembly comprising:

   - a torsion shaft (130) and a free shaft (3), concentric and mounted with angular displacement with respect to one another,
   - an actuator (2), comprising a rotatable output shaft (120) driving the two shafts (130, 3), and
   - a rotation sensor (1) according to claim 9, the rotor (20) of the sensor being integral in rotation with the free shaft and the stator (10) being integral in rotation with the torsion shaft,

   wherein the acquisition and processing unit (50) of the sensor is further adapted to determine, from a rotation angle of the rotor, a torque to which the torsion shaft is subjected.

# FIG. 1

FIG. 2a

FIG. 2b

EP 3 194 917 B1

# FIG. 2c

## FIG. 3a

### Perméance des entrefers en fonction de l'angle de déformation

$$\frac{\theta}{deg}$$

P_{22C}(θ)   P_{22L1}(θ)   P_{22L2}(θ)

## FIG. 3b

### Flux primaire et secondaires

$$\frac{\theta}{deg}$$

$\frac{\phi_P(\theta,n_p,i)}{10^{-3}.Wb}$   $\frac{\phi_{S1}(\theta,n_p,n_s,i)}{10^{-3}.Wb}$   $\frac{\phi_{S2}(\theta,n_p,n_s,i)}{10^{-3}.Wb}$

## FIG. 3c

**Tensions secondaires (V)**

Angle (deg)

———— Us 1          ------- Us 2

## FIG. 3d

**Sensibilité Us fct de la déformation (V / V / deg)**

$\dfrac{\theta}{deg}$

———— $\dfrac{\left|Gain_{Us\theta}(\theta,d\theta)\right|}{\dfrac{V}{V}.deg^{-1}}$

## FIG. 3e

**Sensibilité Us fct de l'effort (mV/N.m)**

$$\frac{\left|\text{Gain}_{\text{UsF}}(\text{Effort,dF})\right|}{\text{mV.(N.m)}^{-1}}$$

EP 3 194 917 B1

# FIG. 4

## RÉFÉRENCES CITÉES DANS LA DESCRIPTION

**Documents brevets cités dans la description**

- GB 2050623 A
- US 2008258715 A1
- US 2012068693 A1